(19) Europäisches Patentamt
European Patent Office
Office européen des brevets

(11) **EP 4 170 279 B1**

(12) **EUROPÄISCHE PATENTSCHRIFT**

(45) Veröffentlichungstag und Bekanntmachung des Hinweises auf die Patenterteilung:
**28.02.2024 Patentblatt 2024/09**

(21) Anmeldenummer: **21204533.0**

(22) Anmeldetag: **25.10.2021**

(51) Internationale Patentklassifikation (IPC):
**G01B 11/00** *(2006.01)* **G01B 11/24** *(2006.01)*

(52) Gemeinsame Patentklassifikation (CPC):
**G01B 5/0007; G01B 11/00;** G01B 11/24

(54) **ANORDNUNG UND VERFAHREN ZUR ERHÖHUNG DER MESSGENAUIGKEIT BEIM DREIDIMENSIONALEN VERMESSEN VON OBJEKTEN**

ARRANGEMENT AND METHOD FOR INCREASING THE MEASURING ACCURACY IN THE THREE-DIMENSIONAL MEASUREMENT OF OBJECTS

AGENCEMENT ET PROCÉDÉ D'AUGMENTATION DE LA PRÉCISION DE MESURE TRIDIMENSIONNELLE D'OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.04.2023 Patentblatt 2023/17**

(73) Patentinhaber: **Metrilus GmbH**
**91080 Uttenreuth (DE)**

(72) Erfinder:
• **PLACHT, Simon**
**91083 Baiersdorf (DE)**
• **SCHALLER, Christian**
**91054 Erlangen (DE)**
• **BALDA, Michael**
**91083 Baiersdorf (DE)**
• **KAYSER, Björn**
**10407 Berlin (DE)**

(74) Vertreter: **Winter, Brandl - Partnerschaft mbB**
**Alois-Steinecker-Straße 22**
**85354 Freising (DE)**

(56) Entgegenhaltungen:
CN-A- 110 580 732   CN-A- 111 273 439
US-A1- 2006 112 023   US-A1- 2018 347 962

EP 4 170 279 B1

**Beschreibung**

Technisches Gebiet

Die vorliegende Offenbarung betrifft eine Anordnung zum dreidimensionalen Vermessen von Objekten gemäß dem Oberbegriff des Anspruchs 1 sowie ein entsprechendes Verfahren.

Hintergrund der Erfindung

In der Transport- und Logistikbranche bilden Volumen- und Gewichtsdaten von Gütern die Grundlage zur Berechnung von Transport- und Lagerkosten und sind zudem limitierende Faktoren in der Lagerhaltung sowie bei der Nutzung von Frachtraum. Aufgrund des global stetig wachsenden Transportaufkommens und immer komplexer werdenden Versorgungsketten besteht daher ein hoher Bedarf an Erfassungsprozessen, die eine automatisierte, schnelle und kostengünstige Ermittlung der Volumen- und Gewichtsdaten ermöglichen, um dadurch sowohl die Verpackung von Gütern, die Transportauslastung, die Lagerhaltung als auch die Kostenberechnung möglichst effizient bestimmen zu können.

Gerade für die Ermittlung von Volumendaten werden hierzu häufig lichtbasierte Messeinheiten wie beispielsweise Time-of-Flight (TOF)-Kameras, Light-Detection-And-Ranging (LIDAR)-Kameras, aber auch Structured-Light (SL)-Kameras und Stereo (S)-Kameras verwendet und mit einer Wägevorrichtung kombiniert. Lichtbasierte Messeinheiten bieten den Vorteil, dass sie gegenüber manuellen Messprozeduren deutlich schneller und präziser sind. Eine Anordnung mit einer Tiefenkamera und einer Waage zum Ermitteln und Übertragen von Volumen- bzw. Gewichtsdaten ist beispielweise aus der JP 3 230 773 U und der CN 2 11 121 547 U bekannt.

Der aus der JP 3 230 773 U sowie der CN 2 11 121 547 U bekannte Stand der Technik weist den Nachteil auf, dass Messeinheiten, die nach dem Messprinzip des Lichtlaufzeitverfahren arbeiten, wie beispielweise Tiefenkameras bzw. TOF-Kameras, bedingt durch Störeffekte, Ungenauigkeiten bei Messergebnissen von relativ niedrigen Objekten aufweisen, die in Bezug zu einer Auflagefläche bzw. einem Untergrund eine Objekthöhe kleiner gleich 50 mm aufweisen. Insbesondere sehr kleine bzw. sehr flache Objekte mit einer Objekthöhe kleiner gleich 10 mm in Bezug zum Untergrund sind teilweise nicht messbar oder werden mit starken Messungenauigkeiten aufgenommen.

Grund für die Ungenauigkeiten in den Lichtlaufzeitmessungen sind Störeffekte wie zeitliches Rauschen, Mehrfachreflexionen und speziell bei TOF-Kameras zusätzlich Streulicht.

Rauschen generell bezeichnet die Verschlechterung eines digitalen bzw. elektronisch aufgenommenen Bildes durch Störungen, die keinen Bezug zum eigentlichen Bildinhalt, dem Bildsignal, haben. Zeitliches Rauschen fasst hierbei sämtliche Rauschquellen zusammen, die den zeitlichen Verlauf eines Pixelwertes von Bildaufnahme zu Bildaufnahme beeinflussen, und umfasst Photonenrauschen, Dunkelstrom, Auslese- und Quantisierungsrauschen.

Mehrfachreflexionen entstehen dadurch, dass das von einer TOF- oder LIDAR-Kamera ausgesandte Licht neben dem direkten Weg von der Kamera zum Objekt und wieder zurück auch zusätzliche indirekte Wege nehmen kann, beispielsweise von der Kamera zu einer Person, die nah am Messobjekt steht und von dieser Person dann zum Objekt und wieder zurück zur Kamera. Dadurch werden Daten der indirekten Lichtpfade/ Mehrfachreflexionen mit den Daten des eigentlichen Nutzlichts, das den direkten Lichtpfad darstellt, vermischt und haben somit Ungenauigkeiten in den 3D-Daten zur Folge.

Streulicht entsteht durch unerwünschte Reflexionen innerhalb des Objektivs einer TOF-Kamera oder dahinter. Auch streuen helle Oberflächen, die sich sehr nahe bei der Lichtquelle befinden, schnell zu viel Licht in das Objektiv. Streulicht führt somit zu einem kontrastarmen Intensitätsbild von TOF-Kameras, weshalb vor allem stark reflektierende Oberflächen im Raum unmittelbar vor der Kamera vermieden werden sollten.

Bedingt durch die vorstehend genannten Störeffekte bildet sich auf einem Untergrund, auf dem sich ein zu vermessendes Objekt befindet, ein für die Messeinheit virtuell wahrnehmbarer Bereich, der sich in Abhängigkeit der Störeffekte der jeweiligen Messeinheit mehrere Millimeter in Höhenrichtung vom Untergrund erstreckt, und in dem 3D-Daten des zu vermessenden Objekts verfälscht gemessen werden oder nicht erfasst werden können. Insbesondere kleinere Objekte, die eine geringere Höhe als 10 mm im Bezug zum Untergrund haben, können teilweise völlig im Ungenauigkeitsbereich versinken bzw. von diesem fast über deren gesamte Höhenerstreckung umgeben sein, sodass deren Vermessung stark verfälscht oder unmöglich wird.

Auch bei anderen lichtbasierten Messeinheiten wie SL-Kameras und Stereo-Kameras tritt der vorstehend erwähnte, mit Ungenauigkeiten behaftete Bereich auf, wird aber teilweise durch andere Störeffekte verursacht.

Ähnlich wie bei TOF- oder LIDAR-Kameras wird der Genauigkeitsbereich bei SL- und Stereo-Kameras durch zeitliches Rauschen beeinflusst. Darüber hinaus treten bei SL- und Stereo-Kameras auch Fehler in der Lokalisation von projizierten Musterbereichen auf, denn um genaue Tiefendaten berechnen zu können, müssen die projizierten Musterbereich äußerst genau, auf den Bruchteil eines Pixels, lokalisiert werden. Hierbei sind kleine Fehllokalisierungen kaum vermeidlich, die zu Ungenauigkeiten in den 3D-Daten führen.

Weiterhin können in den SL- und Stereo-Kameras Veränderungen in der Stereobasis auftreten, die durch Temperaturausdehnung oder mechanische Verwindungen hervorgerufen werden und wodurch sich innerhalb der Messeinheit die geometrische Konstellation von Lichtmusterprojektor und Kamera geringfügig verändern und infolgedessen zu verfälschten Aufnahmen bei der Triangulation führen. Auch hier sind Ungenauigkeiten in den Tiefendaten die Folge und beeinflussen den Genauigkeitsbereich an der Untergrundoberfläche.

Der vorstehend beschriebene Stand der Technik von lichtbasierten Messeinheiten wie TOF-, LIDAR-, S-, SL-Kameras hat somit den Nachteil, dass auf dem Untergrund, auf dem sich das zu vermessende Objekt befindet, ein für die Kamera-Messeinheiten wahrnehmbarer Bereich existiert, der insbesondere bei zu vermessenden Objekten mit einer geringen Objekthöhe in Bezug zum Untergrund zu fehlerhaften 3D-Daten und somit zu fehlerhaften Volumenmessungen führen kann.

Weiterer Stand der Technik zur Volumenmessung von Objekten ist darüber hinaus aus den Druckschriften CN 110 580 732 A, US 2018/347 962 A1, US 2006 / 112 023 A1 und CN 111 273 439 A bekannt.

Zusammenfassung der Erfindung

Ausgehend von dem vorstehend beschriebenen Stand der Technik und dessen Nachteilen liegt der Erfindung die Aufgabe zugrunde, eine Messanordnung und ein Verfahren bereitzustellen, die es ermöglichen, präzise 3D-Messdaten von dem zu vermessenden Objekt zu erfassen und die eine genaue Ermittlung der Abmaße des zu vermessenden Objekts erlauben.

Diese Aufgabe wird gelöst durch eine Messanordnung gemäß Anspruch 1 und ein Verfahren gemäß dem nebengeordneten Anspruch. Vorteilhafte Weiterbildungen sind jeweils Gegenstand von Unteransprüchen.

Gemäß einem ersten Aspekt der Erfindung weist die Anordnung zum dreidimensionalen Vermessen von Objekten einen planaren Untergrund, um darauf zumindest ein zu vermessendes Objekt zu platzieren, eine Sendevorrichtung zum Aussenden von Lichtstrahlen in Richtung des zumindest einen Objekts, eine Empfangsvorrichtung zum Erfassen der von dem zumindest einem Objekt und dem Untergrund reflektierten Lichtstrahlen und eine Ermittlungsvorrichtung zum Ermitteln von 3D-Daten anhand von Lichtlaufzeitmessungen und/oder Triangulation der ausgesandten und reflektierten Lichtstrahlen und zum Ermitteln der Abmessungen der äußeren Hülle des zumindest einen Objekts aus den ermittelten 3D-Daten auf.

Weiterhin weist die Anordnung zum Vermessen von Objekten eine transparente Platte mit einer vorbestimmten Dicke D zum Anordnen zwischen dem zumindest einem Objekt und dem Untergrund auf, wobei die Dicke D höher als der sich auf dem Untergrund ausbildende, störende Messungenauigkeitsbereich ist und wobei die Ermittlungsvorrichtung die ermittelten 3D-Daten oder die ermittelten Abmessungen der äußeren Hülle des zumindest einen Objekts um die Dicke D der transparenten Platte korrigiert. Die Korrektur wird dabei so durchgeführt, dass die Ermittlungsvorrichtung zunächst 3D-Daten des zu zumindest einen Objekts samt transparenter Platte und des Untergrunds, der als Referenzoberfläche dient, ermittelt und die Ermittlungsvorrichtung eine virtuelle, planare, parallel zur Referenzoberfläche verlaufende und zu dieser um mindestens die Dicke D beabstandete Separationsebene ermittelt. Anschließend trennt und eliminiert die Ermittlungseinrichtung die ermittelten 3D-Daten zwischen Separationsebene und Referenzoberfläche von den restlichen ermittelten 3D-Daten und ermittelt die Abmessungen der äußeren Hülle des zu zumindest einen Objekts anhand der restlichen 3D-Daten.

Die transparente Platte kann eine transparente Kunststoff- oder Glasplatte sein. Die Dicke D der Platte liegt vorzugsweise in einem Bereich zwischen 1 und 50 Millimetern, besonders bevorzugt in einem Bereich zwischen 1 und 8 Millimetern.

Durch die transparente, für die Ermittlungsvorrichtung nicht wahrnehmbare Platte wird es möglich, dass zum einen die ausgesandten Lichtstrahlen nach wie vor bis zum Untergrund nahezu ungestört durchfallen und reflektiert werden können, sodass sich der für die Kamera virtuell wahrnehmbare Messungenauigkeitsbereich nach wie vor über dem Untergrund ausbildet, aber zum anderen das zu vermessende Objekt sozusagen aus dem Messungenauigkeitsbereich herausgehoben und vom Untergrund beabstandet wird. Durch das Herausheben des zu vermessenden Objektes aus dem Messungenauigkeitsbereich wird es möglich, außerhalb des Messungenauigkeitsbereichs fehlerfreie 3D-Daten von den Außenkonturen des zu vermessenden Objektes zu erfassen, wobei die durch die zwischengefügte transparenten Platte künstlich erhöhte Objekthöhe um einen festen Betrag, der der Höhe bzw. der Dicke der transparenten Platte entspricht, korrigiert wird.

Genauer gesagt wird von der fehlerhaften bzw. manipulierten Messhöhe des Objekts die Höhe der zwischengefügten transparenten Platte abgezogen. Indem die Höhe bzw. Dicke der transparenten Platte bewusst größer als der zu erwartende Messungenauigkeitsbereich bzw. Messrauschteppich über dem Untergrund gewählt wird und diese anschließend wieder vom Messergebnis abgezogen wird, haben die störeffektbedingten Messungenauigkeiten keinerlei Einfluss auf das finale (korrigierte) Messergebnis.

Durch die Ermittlung der virtuellen Separationsebene ist es möglich, die 3D-Daten mit hoher Messgenauigkeit oberhalb des Messungenauigkeitsbereichs präzise und definiert von den fehlerhaften bzw. 3D-Messdaten mit geringerer Messgenauigkeit innerhalb des Messungenauigkeitsbereichs zu trennen und die erfassten, fehlerbehafteten 3D-Messdaten unterhalb der Separationsebene zu eliminieren. Durch das Eliminieren der für die Außenabmaße des zu vermessenden Objektes unnötigen 3D-Daten des Messungenauigkeitsbereichs wird gleichzeitig der Berechnungsaufwand und die Fehleranfälligkeit für die Berechnung der Außenabmaße des zu vermessenden Objektes deutlich reduziert.

In einem weiteren bevorzugten Aspekt der Erfindung kann die Anordnung zum dreidimensionalen Vermessen von Objekten mindestens eine Verstellmimik, wie z.B. eine verstellbare Hubsäule, aufweisen, um die transparente Platte in Höhenrichtung um einen Abstand A in einem Bereich von 0,1 - 20 Millimetern vom Untergrund und parallel dazu beabstanden zu können.

Der zusätzliche Abstand A zwischen der transparenten Platte und dem Untergrund bietet den Vorteil, dass auch für den Fall, bei dem sich der Messungenauigkeitsbereich, der sich variabel durch Außeneinflüsse verändern kann, vom Untergrund in Höhenrichtung über die Dicke D der transparenten Platte erstreckt und somit Abschnitte des zu vermessenden Objektes umgibt und dessen erfasste 3D-Daten verfälscht, die transparente Platte um einen Abstand A angehoben werden kann, sodass sich zumindest die zum vermessenden Objekt gewandte Oberseite der transparente Platte vollständig außerhalb des Messungenauigkeitsbereichs befindet. Das (vorläufige) Messergebnis wird entsprechend um die Summe aus der Dicke D der transparenten Platte und dem Abstand A korrigiert.

In anderen Worten ausgedrückt, die durch die zumindest eine Hubsäule ermöglichte Höhenverstellung der transparenten Platte erlaubt eine flexible Anpassung der Messposition an unterschiedliche Ausdehnungen des Messungenauigkeitsbereichs, sodass das Messobjekt stets außerhalb des Messungenauigkeitsbereichs positioniert werden kann und somit eine präzise 3D-Datenerfassung des zu vermessenden Objekts ermöglicht wird, frei von Störeinflüssen des Messungenauigkeitsbereichs. Die Hubsäule kann vorzugsweise durch einen Servomotor angetrieben werden.

Gemäß einem weiteren Aspekt kann die Anordnung zum dreidimensionalen Vermessen von Objekten eine Eingabeeinrichtung zur manuellen oder automatisierten Eingabe der Dicke D der transparenten Platte und/oder des Abstandes A zwischen transparenter Platte und/ oder eine Eingabeschnittstelle zum Empfangen der von einer Messvorrichtung gemessenen Dicke D der transparenten Platte und/oder des Abstandes A zwischen transparenter Platte und Untergrund aufweisen.

Die manuelle Eingabe bietet den Vorteil, dass die für den Anwender bekannte Dicke D der zwischen Objekt und Untergrund zwischengelegten, transparenten Platte für die Ermittlungsvorrichtung präzise eingegeben werden kann, ohne dass es hierbei zu Fehlern bei der Bestimmung der Dicke D der transparenten Platte durch die Ermittlungsvorrichtung kommt. Die Eingabeeinrichtung kann hierbei als PC ausgeführt sein. Auch kann als Eingabeeinrichtung ein Datenträger dienen, auf dem eine Konfigurations-Datei mit entsprechenden Abmaßen der transparenten Platte hinterlegt ist.

Der variabel-verstellbare Abstand A zwischen der transparenten Platte und dem Untergrund, der mit einer Hubsäule mit vorzugsweise einem Servomotor eingestellt wird, kann präzise über eine Messvorrichtung im Servomotor, beispielsweise Resolver, Inkrementalgeber oder Absolutwertgeber, erfasst und über eine Daten- bzw. Eingabeschnittstelle an die Ermittlungsvorrichtung übertragen werden.

Entsprechend einem weiteren Aspekt der Anordnung zum dreidimensionalen Vermessen von Objekten kann die Sendevorrichtung, die Empfangsvorrichtung und die Ermittlungsvorrichtung für die Laufzeitmessung der ausgesandten und reflektierten Lichtstrahlen als eine TOF-Kamera und/oder als eine LIDAR-Kamera ausgeführt sein oder die Sendevorrichtung, die Empfangsvorrichtung und die Ermittlungsvorrichtung für die Triangulation der ausgesandten und reflektierten Lichtstrahlen kann als eine SL-Kamera und/oder als eine Stereo-Kamera ausgeführt sein.

Bevorzugt kann der Untergrund der Anordnung zum dreidimensionalen Vermessen von Objekten eine opake Oberfläche und/oder die transparente Platte auf der dem Untergrund zugewandten Seite eine opake, Licht diffus-reflektierende Funktionsschicht, insbesondere eine Kunststoff-Hartschaumschicht, aufweisen, welche durch die transparente Platte fallendes Licht diffus-reflektiert.

Die opake Oberfläche bzw. opake Funktionsschicht bietet den Vorteil, dass das Licht diffus reflektiert wird und so definierte Reflexionsgrade ermöglicht werden können, sodass für die Ermittlungsvorrichtung eine gleichmäßige Lichtverteilung in sämtlichen Bereichen festgestellt werden kann, in denen das ausgesandte Licht auf die opake Oberfläche trifft. Dadurch werden Spiegeleffekte vermieden, die zu Überbelichtung führen können oder das emittierte Licht an der Empfängereinheit vorbeireflektieren können und dadurch keine Daten liefern.

Entsprechend einem weiteren Aspekt kann die transparente Platte zumindest eine Lage aus elektrochromen Glas, vorzugsweise mit einstellbarem Transmissionsgrad, aufweisen.

Dies hat den Vorteil, dass der Transmissionsgrad der transparenten Platte auf verschiedene Anwendungsverhältnisse wie beispielsweise sich ändernde Umgebungslichtverhältnisse angepasst und dadurch die Intensität des reflektierten Lichts beeinflusst werden kann.

Ein weiterer Vorteil des elektrochromen Glas ist, dass es vollständig opak geschaltet werden kann, dadurch kann das von der Sendevorrichtung ausgesandte Licht nicht mehr durch die Platte, die zuvor transparent war, fallen und wird direkt an der Oberseite der nun intransparenten Platte reflektiert. Durch das Opak-Schalten der Oberseite der nun intransparenten Platte, wird die Oberseite der Platte für die Ermittlungsvorrichtung erfassbar und der Abstand zur Oberseite der Platte kann gemessen werden.

Ausgehend von den gemessenen Abstandswerten der Ermittlungsvorrichtung mit einer transparenten Platte, bei der die ausgesandten Lichtstrahlen am Untergrund reflektiert werden und in Verbindung mit den gemessenen Abstandswerten bei der opak-geschalteten Platte, bei denen die ausgesandten Lichtstrahlen an der Plattenoberseite reflektiert werden, kann die Ermittlungsvorrichtung aus der Differenz der beiden Abstandmessungen die Dicke D der transparenten Platte ermitteln.

Weiterhin kann die transparente Platte zumindest eine austauschbare, transparente Lage, vorzugsweise Schutzfolie, aus Kunststoff aufweisen, die die transparente Platte vor Oberflächenschäden, insbesondere Kratzern schützt, sodass die optischen Eigenschaften der transparenten Platte unverändert bleiben.

Durch die austauschbare, transparente Schutzfolie ist es möglich die transparente Platte effektiv vor Oberflächenschäden wie Kratzern, die beim Platzieren des zu vermessenden Objektes entstehen können, zu schützen. Gleichzeitig können abgenutzte transparente Schutzfolien einfach ausgetauscht werden und ermöglichen damit eine einfache Wartung der Auflagefläche der transparenten Platte.

In einem weiteren Aspekt kann die transparente Platte polarisierende Eigenschaften aufweisen.

Durch die polarisierenden Eigenschaften der transparenten Platte können störende Spiegelungen, die zu Messungenauigkeiten führen, reduziert werden.

Weiterhin kann der Untergrund zum Auflegen des zu vermessenden Objektes durch eine Auflagefläche einer Waage gebildet werden.

Dies bietet den Vorteil, dass Volumen- und Gewichtsmessung des Objekts gleichzeitig durchgeführt werden kann. Ferner muss eine Waage, die mit der Anordnung zum dreidimensionalen Vermessen von Objekten gekoppelt wird, nicht zunächst umgerüstet werden und ist somit bereits auf die restliche Messanordnung abgestimmt.

In anderen Worten ausgedrückt, der Untergrund mit der darauf befestigten transparenten Platte kann einen standardisierten Aufsatz für Waagen darstellen bzw. als Waagschale fungieren. Die spezifischen Eigenschaften des Untergrundes und seiner wahlweise opaken Oberfläche sowie die Eigenschaften der transparenten Platte können in einer Konfigurations-Datei hinterlegt sein und über eine Eingabeeinrichtung in die Ermittlungsvorrichtung übertragen werden.

In einem weiteren Aspekt kann die transparente Platte als Teil eines elektrisch angesteuerten Displays, insbesondere eines LCD- oder OLED-Displays, ausgeführt sein.

Zusätzlich zur transparenten Platte kann das Display unterstützend zur Trennung von Objekt und Untergrund bzw. Hintergrund herangezogen werden. Diese Trennung erfolgt nach folgendem Prinzip:

Neben der Ermittlungsvorrichtung zur Erfassung von 3D-Daten kann das System zusätzlich mit einer oder mehreren Farbkameras ausgestattet werden. Jede Farbkamera wird dabei zur Ermittlungsvorrichtung kalibriert, d.h. es wird sowohl eine projektive Abbildung der Farbkamera als auch eine Starrkörpertransformation zwischen der 3D-Ermittlungsvorrichtung und Farbkamera ermittelt.

Die Starrkörpertransformation wird hierbei verwendet, die Position und Orientierung des von der Ermittlungsvorrichtung erfassten 3D-Datensatzes, d.h. dessen Koordinatensystem, bezüglich einem Referenzkoordinatensystem, nämlich dem der Farbkamera, zu beschreiben.

Mit Hilfe der Starrkörpertransformation kann die äußere Hülle des aufgenommenen Objektes auf die Bildebene jeder Farbkamera transformiert werden.

Für den Fall, dass die auf die Bildebene der Farbkamera transformierte äußere Hülle beim Abgleich mit dem auf dem Display befindlichen Objekt noch Bildbereiche beinhaltet, die über das Objekt hervorstehen, wird die transformierte äußere Hülle mit Hilfe des Abgleichs weiter verfeinert bzw. angepasst, d.h. die entsprechenden überstehenden Bereiche werden aus der äußeren Hülle entfernt.

Die Identifikation von Displaybereichen im Farbbild erfolgt dabei über eine zeitliche Analyse jedes individuellen Pixels, z.B. durch Abspielen einer schnellen Schwarz-Weiß-Sequenz auf dem Display. In zum Display überstehenden Bereichen der transformierten äußeren Hülle werden diese Farbwechsel deutlich sichtbar sein, wohingegen in zum Objekt gehörenden Bereichen aufgrund der Verdeckung des Displays keine Farbwechsel sichtbar sein werden.

In anderen Worten ausgedrückt wird es durch das Abspielen der schnellen Schwarz-Weiß-Sequenz auf dem Display somit möglich, die von der Ermittlungsvorrichtung erfassten 3D-Daten, die zu einer virtuellen Projektion der äußeren Hülle in das Farbbild der Farbkamera transformiert wurden, mit dem realen zu vermessenden Objekt auf dem Display hochpräzise abzugleichen, zu korrigieren und dadurch die Messgenauigkeit weiter zu erhöhen. Denn durch die für die Farbkamera wahrnehmbaren Schwarz-Weiß-Farbwechsel um das auf dem Display liegende Messobjekt herum, wird sozusagen ein hoher, über die Zeit wahrnehmbarer Kontrast zwischen überstehenden Bereichen der Projektion der äußeren Hülle der Farbkamera und dem farbwechselnden Display-Untergrund erzeugt. Der hohe Kontrast ermöglicht eine präzise Trennung von überlappenden Bereichen von Messobjekt und Projektion der äußeren Hülle zum einen, und Bereichen der Projektion der äußeren Hülle, die über das Messobjekt hervorstehen und sich mit dem farbwechselnden Display überlagern zum anderen.

Gemäß einem weiteren Aspekt der Erfindung wird ein Verfahren zum dreidimensionalen Vermessen von Objekten bereitgestellt, welches die folgenden Schritte aufweist: Platzieren zumindest eines zu vermessenden Objekts auf einem planaren Untergrund, Aussenden von Lichtstrahlen in Richtung des zumindest einen Objekts und Erfassen der von dem zumindest einem Objekt und dem Untergrund reflektierten Lichtstrahlen, Ermitteln von 3D-Daten anhand von Laufzeitmessungen und/oder Triangulation der ausgesandten und reflektierten Lichtstrahlen und Ermitteln der Abmessungen der äußeren Hülle des zumindest einen Objekts aus den ermittelten 3D-Daten, Anordnen einer transparenten Platte mit einer vorbestimmten Dicke D zwischen dem zumindest einem Objekt und dem Untergrund, wobei die Dicke D größer als ein sich auf dem Untergrund ausbildender Messungenauigkeitsbereich ist, und Korrigieren der ermittelten 3D-Daten oder der ermittelten Abmessungen der äußeren Hülle des zumindest einen Objekts um die Dicke D der transparenten Platte. Weitere Verfahrensschritte des Verfahrens sind das Ermitteln von 3D-Daten des zumindest einen Objekts samt transparenter Platte und des Untergrunds, der als Referenzoberfläche dient, das Ermitteln einer virtuellen, planaren, parallel zur Referenzoberfläche verlaufenden und zu dieser um die Dicke D beabstandeten Separationsebene, das Trennen und Eliminieren der ermittelten 3D-Daten zwischen Separationsebene und Referenzoberfläche von den restlichen ermittelten 3D-Daten und das Ermitteln der Abmessungen der äußeren Hülle des zu zumindest einen Objekts anhand der restlichen 3D-Daten.

Das Verfahren zum dreidimensionalen Vermessen von Objekten ermöglicht es, 3D-Daten des zu vermessenden Objektes zu ermitteln, die nicht durch den sich am Untergrund ausbildenden Messungenauigkeitsbereich beeinflusst bzw. verfälscht werden und korrigiert die ermittelten 3D-Daten oder ermittelten Abmessungen der äußeren Hülle des zumindest einen Objekts automatisch um die Dicke D der transparenten Platte.

Durch den Ermittlungsschritt der virtuellen Separationsebene ist es möglich, die 3D-Daten mit hoher Messgenauigkeit oberhalb des Messungenauigkeitsbereichs präzise und definiert von den fehlerhaften bzw. 3D-Messdaten mit geringerer Messgenauigkeit innerhalb des Messungenauigkeitsbereichs zu trennen und die 3D-Messdaten aus dem Messungenauigkeitsbereich zu eliminieren. Durch das Eliminieren der für die Außenabmaße des zu vermessenden Objektes unnötigen 3D-Daten des Messungenauigkeitsbereichs wird gleichzeitig der Berechnungsaufwand und die Fehleranfälligkeit für die Berechnung der Außenabmaße des zu vermessenden Objektes reduziert.

Kurzbeschreibung der Figuren

Die Erfindung wird nachfolgend anhand bevorzugter Ausführungsbeispiele mit Hilfe von Figuren näher erläutert.

Fig. 1 ist eine Darstellung einer Anordnung zum dreidimensionalen Vermessen von Objekten gemäß dem Stand der Technik;

Fig. 2 ist eine Darstellung einer Anordnung zum dreidimensionalen Vermessen von Objekten gemäß einer ersten Ausführungsform der Erfindung;

Fig. 3 ist eine Darstellung einer Anordnung zum dreidimensionalen Vermessen von Objekten gemäß einer zweiten Ausführungsform der Erfindung;

Fig. 4 ist eine Darstellung einer Anordnung zum dreidimensionalen Vermessen von Objekten gemäß einer dritten Ausführungsform der Erfindung;

Fig. 5 ist eine Draufsicht auf das in Fig. 4 dargestellte Display sowie das zu vermessende Objekt und einen überstehenden Bereich einer transformierten äußeren Hülle;

Fig. 6 ist eine Darstellung einer Anordnung zum dreidimensionalen Vermessen von Objekten gemäß einer vierten Ausführungsform der Erfindung ohne Messvorrichtung;

Fig. 7 ist eine Darstellung einer Anordnung zum dreidimensionalen Vermessen von Objekten gemäß einer fünften Ausführungsform der Erfindung ohne Messvorrichtung;

Fig. 8 ist eine Darstellung einer Anordnung zum dreidimensionalen Vermessen von Objekten gemäß einer sechsten Ausführungsform der Erfindung ohne Messvorrichtung;

Fig. 9 ist eine Darstellung einer Anordnung zum dreidimensionalen Vermessen von Objekten gemäß einer siebten Ausführungsform der Erfindung ohne Messvorrichtung; und

Fig. 10 zeigt ein Ablaufdiagramm eines erfindungsgemäßen Verfahrens zum dreidimensionalen Vermessen von Objekten,

Fig. 11 zeigt die Fortsetzung des Ablaufdiagramms des erfindungsgemäßen Verfahrens zum dreidimensionalen Vermessen von Objekten.

Beschreibung der Ausführungsbeispiele

Nachstehend werden Ausführungsbeispiele der vorliegenden Offenbarung auf der Basis der zugehörigen Figuren beschrieben. Die gleichen Elemente sind mit denselben Bezugszeichen versehen. Merkmale der einzelnen Ausführungsbeispiele können untereinander ausgetauscht werden.

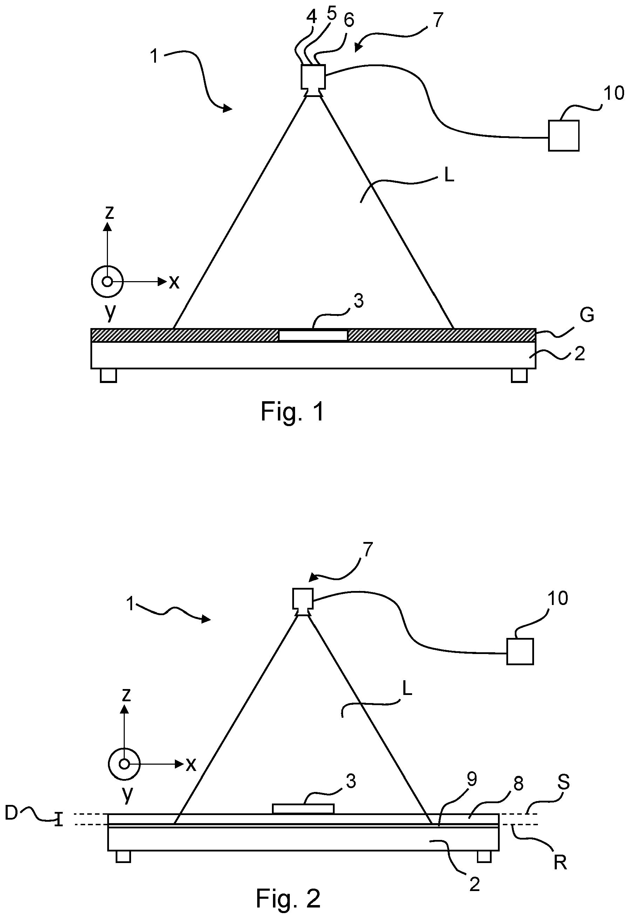

Fig. 1 zeigt eine Anordnung 1 zum dreidimensionalen Vermessen von Objekten mit einem planaren Untergrund 2 auf dem sich ein zu vermessendes Objekt 3 befindet, das kleiner gleich 10 mm hoch ist. Mittig oberhalb des zu vermessenden Objekts 3 befindet sich eine Sendevorrichtung 4 zum Aussenden von Lichtstrahlen L in Richtung des zumindest einen Objektes 3, eine Empfangsvorrichtung 5 zum Erfassen der von dem Objekt 3 und dem Untergrund 2 reflektierten Lichtstrahlen und eine Ermittlungsvorrichtung 6 zum Ermitteln von 3D-Daten anhand von Laufzeitmessungen und/ oder Triangulation der ausgesandten Lichtstrahlen L und reflektierten Lichtstrahlen und zum Ermitteln der Abmessung der äußeren Hülle des Objekts 3 aus den ermittelten 3D-Daten. Die Sendevorrichtung 4, die Empfangsvorrichtung 5 und die Ermittlungsvorrichtung 6 sind in der Regel allesamt Bestandteil einer Messeinheit 7, konkret beispielsweise einer TOF-, LIDAR-, SL- oder Stereo-Kamera 7.

Wie aus Fig. 1 zu entnehmen ist, bildet sich auf der Oberfläche des Untergrundes 2 ein für die Ermittlungsvorrichtung 6 der Messeinheit 7 virtuell wahrnehmbarer Messungenauigkeitsbereich G aus, der sich in Abhängigkeit bestimmter Störeffekte und je nach verwendeter Messeinheit 7(TOF-, LIDAR-, SL- oder Stereo-Kamera) mehrere Millimeter in Höhenrichtung vom Untergrund erstreckt und in dem 3D-Daten des zu vermessenden Objekts 3 verfälscht gemessen werden oder nicht erfasst werden können, wenn sich das Objekt 3 vollständig oder nahezu vollständig innerhalb des Messungenauigkeitsbereichs G befindet.

Der Messungenauigkeitsbereich G wird durch unterschiedliche Störeffekte hervorgerufen und variiert je nach verwendeter Messeinheit 7. Bei Messeinheiten 7, die für den Messprozess TOF- oder LIDAR-Kameras verwenden, treten als Störeffekte z.B. zeitliches Rauschen und Mehrfachreflexionen auf. Bei TOF-Kameras zusätzlich noch Streulicht.

Bei Messeinheiten 7, die SL- oder Stereo-Kameras verwenden, treten als Störeffekte z.B. zeitliches Rauschen, Fehler in der Lokalisation von projizierten Musterbereichen sowie Veränderungen in der Stereobasis auf.

Wie aus Fig. 1 ersichtlich wird, befindet sich das Objekt 3 aufgrund seiner geringen Höhe in z-Richtung vollständig im Messungenauigkeitsbereich G, wodurch es für die Messeinheit 7 nicht oder nur bedingt möglich ist, den Abstand zur Oberkante des Objekts 3 präzise zu bestimmen und genaue 3D-Daten zu erfassen.

Um den Messungenauigkeitsbereich G zu umgehen und präzise Messungen des Objektes 3 zu ermöglichen, wird, wie in Fig. 2 dargestellt, gemäß einer ersten Ausführungsform der Erfindung, eine transparente Platte 8 mit der Dicke D zwischen dem Objekt 3 und dem Untergrund 2 platziert. Die Dicke der transparenten Platte kann sich in einem Bereich zwischen 1 - 50 mm bewegen. Zusätzlich ist zwischen dem Untergrund 2 und der transparenten Platte 8 noch eine opake Funktionsschicht 9 angeordnet, die vorzugsweise eine Kunststoff-Hartschaumschicht ist und diffus-reflektiert, sodass für die Ermittlungsvorrichtung 6 eine gleichmäßige Lichtverteilung in sämtlichen Bereichen festgestellt werden kann, in denen das ausgesandte Licht L auf die opake Oberfläche trifft.

Durch die transparente, für die Ermittlungsvorrichtung 6 nicht wahrnehmbare Platte 8, fallen die ausgesandten Lichtstrahlen L nach wie vor bis zum Untergrund 2 bzw. zur opaken Funktionsschicht 9 nahezu ungestört durch und werden anschließend reflektiert, sodass sich der für die Messeinheit 7 virtuell wahrnehmbare Messungenauigkeitsbereich G nach wie vor am Untergrund 2 bzw. an der opaken Funktionsschicht 2 ausbildet, aber zum anderen das zu vermessende Objekt 3 sozusagen aus dem Messungenauigkeitsbereich G hervorgehoben und vom Untergrund 2 beabstandet wird.

In anderen Worten ausgedrückt bildet sich der Messungenauigkeitsbereich G innerhalb der für die Messeinheit 7 nicht wahrnehmbaren, transparenten Platte 8 aus, während das zu vermessenden Objekt 3 auf der transparenten Platte 8 aufliegt und dadurch vom Messungenauigkeitsbereich G beabstandet ist.

Während der dreidimensionalen Vermessung des Objekts 3 ermittelt die Ermittlungsvorrichtung 6 zunächst 3D-Daten des Objekts 3 samt Messungenauigkeitsbereich G und der Funktionsschicht 9, die als Referenzoberfläche R dient. Gleichzeitig ermittelt die Ermittlungsvorrichtung 6 auch eine virtuelle, planare, parallel zur Referenzoberfläche verlaufende und zu dieser um mindestens die Dicke D beabstandete Separationsebene S. Anschließend trennt die Ermittlungsvorrichtung 6 die ermittelten 3D-Daten zwischen Separationsebene S und Referenzoberfläche R von den restlich ermittelten 3D-Daten und eliminiert die 3D-Daten aus dem Zwischenbereich der Referenzfläche R und der Separationsebene S. Daraufhin ermittelt die Ermittlungsvorrichtung 6 präzise die Abmessungen der äußeren Hülle des 3D-Objekts anhand der restlichen 3D-Daten.

Über eine Eingabeeinrichtung 10 kann hierbei die Dicke D der transparenten Platte 8 präzise eingegeben werden. Die Eingabeeinrichtung 10 kann als PC ausgeführt sein. Auch kann als Eingabeeinrichtung 10 ein Datenträger dienen, auf dem eine Konfigurations-Datei mit entsprechenden Abmaßen der transparenten Platte 8 hinterlegt ist.

Die Dicke D der Platte 8 wird hierbei in Abstimmung zum Messungenauigkeitsbereich G gewählt, der je nach Umweltbedingungen und verwendeter Messeinheit 7 variiert. Grundsätzlich wird die Dicke D der Platte 8 so gewählt, dass diese mindestens um den Faktor 1,2 höher als der bei bekannten Umgebungsparametern auftretende Ungenauigkeitsbereich G ist, um das zu vermessende Objekt 3 auch bei unvorhergesehenen Schwankungen des Ungenauigkeitsbereichs G, bei denen dieser höher als geplant ist, das Objekt 3 vollkommen außerhalb des Messungenauigkeitsbereichs G zu beabstanden.

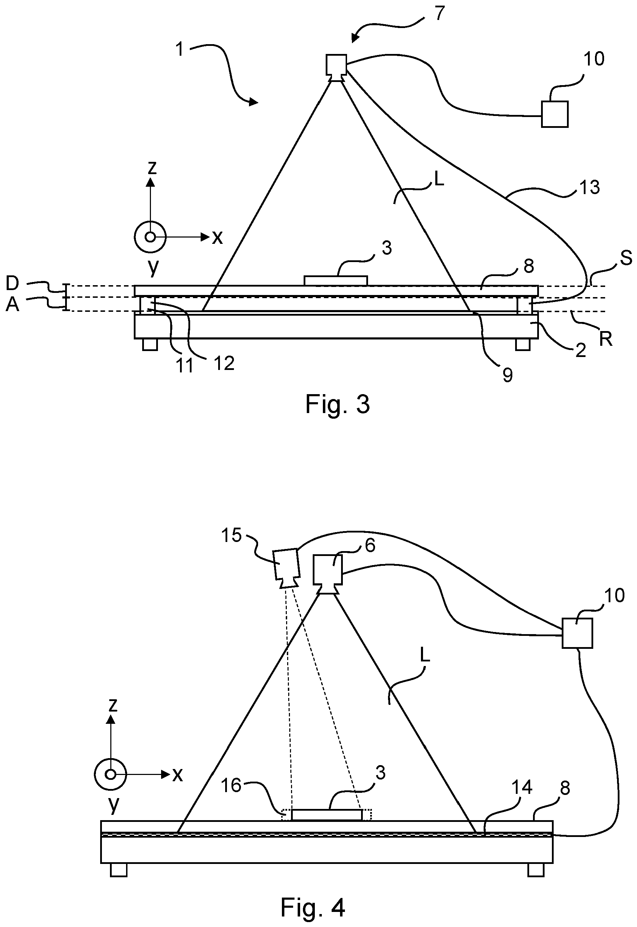

In Fig. 3 ist eine Anordnung 1 zum dreidimensionalen Vermessen von Objekten 3 nach einer zweiten Ausführungsform gemäß der Erfindung gezeigt. Im Gegensatz zur ersten Ausführungsform weist die zweite Ausführungsform zusätzlich Hubsäulen 11 auf, mittels derer die transparente Platte 8 relativ und senkrecht zum Untergrund 2 verfahren werden kann. Die Hubsäulen 11 sind insbesondere für den Fall vorgesehen, dass sich der Messungenauigkeitsbereich G in z-Richtung über die transparente Platte hinaus erstreckt und das Objekt 3 umgibt. In diesem Fall kann das Objekt 3 durch die Hubsäulen 3 weiter in z-Richtung um den variablen Abstand A, der zwischen 0,1 und 20 mm liegt, vom Untergrund 2 und der Funktionsschicht 9 beabstandet werden, sodass das Objekt 3 außerhalb des Messungenauigkeitsbereich G liegt.

Die Hubsäulen 11 können hierbei beispielweise durch einen Servomotor angetrieben werden, der eine Messvorrichtung 12 zur Aufzeichnung des Verfahrwegs, beispielsweise einen Resolver, Inkrementalgeber oder Absolutwertgeber aufweist. Der Verfahrweg, der dem Abstand A entspricht wird über eine Eingabeschnittstelle 13 an die Messeinheit 7 weitergegeben.

Die Abmessungen des zu vermessenden Objekts werden hierbei zum Volumen berechnet, wobei die Variable x für die Länge, die Variable y für die Breite und die Variable z für die gemessene Höhe H, abzüglich der Plattendicke D und des durch die Hubsäule 11 verfahrenen Abstands A, des zu vermessenden Objektes steht.

In anderen Worten ausgedrückt ist zu beachten, dass die von der Messvorrichtung gemessene Höhe H mit der Dicke D der transparenten Platte 8 und den durch die Hubsäulen einstellbaren Abstand A korrigiert werden muss. Dementsprechend lautet die Volumen-Berechnungsformel für die Ermittlungsvorrichtung 6 bzw. Messvorrichtung 7 der vorliegenden Erfindung:

$$V = x \cdot y \cdot z = x\ y\ (H-(D+A)$$

In Fig. 4 ist eine Anordnung 1 zum dreidimensionalen Vermessen von Objekten 3 nach einer dritten Ausführungsform gemäß der Erfindung gezeigt. In der dritten Ausführungsform ist die transparente Platte 8 als Teil eines elektrischen Displays 14 ausgeführt. Das Display unterstützt hierbei die Trennung von Objekt 3 und Untergrund 2 bzw. dem Display 14, das den Untergrund 2 bedeckt.

Neben der Ermittlungsvorrichtung 6 zur Erfassung von 3D-Daten weist die Anordnung 1 zusätzlich eine Farbkamera 15 auf. Die Farbkamera 15 ist dabei zur Ermittlungsvorrichtung 6 kalibriert, d.h. es wird sowohl eine projektive Abbildung der Farbkamera 15 als auch eine Starrkörpertransformation zwischen der 3D-Ermittlungsvorrichtung 6 und Farbkamera 15 ermittelt.

Die Starrkörpertransformation wird hierbei verwendet, um die Position und Orientierung des von der Ermittlungsvorrichtung 6 erfassten 3D-Datensatzes, d.h. dessen Koordinatensystem, bezüglich einem Referenzkoordinatensystem, nämlich dem der Farbkamera 15, zu beschreiben.

Mit Hilfe der Starrkörpertransformation kann die äußere Hülle 16 des aufgenommenen Objektes 3 auf die Bildebene der Farbkamera 15 transformiert werden.

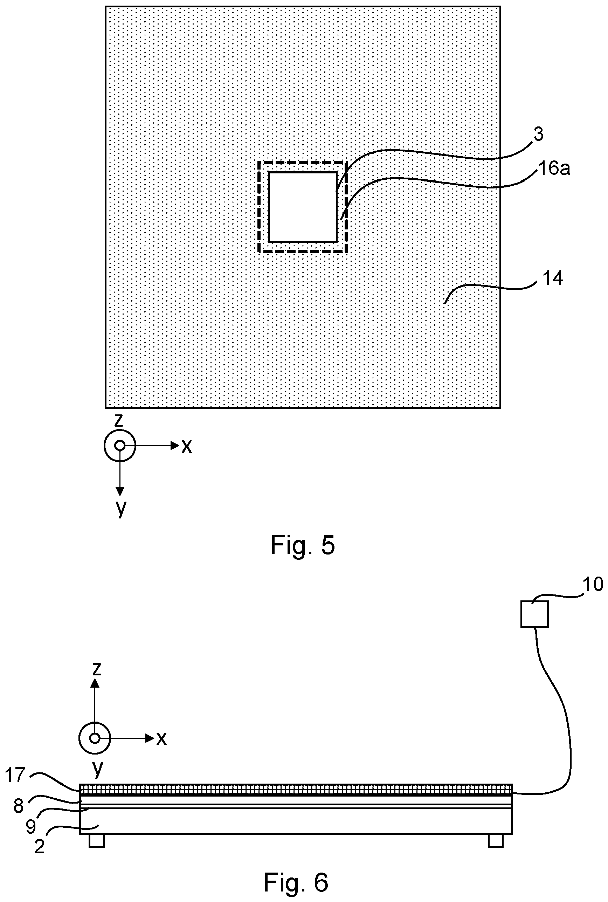

In Fig. 4 und Fig. 5 ist gezeigt, wie die auf die Bildebene der Farbkamera 15 transformierte äußere Hülle 16 beim Abgleich mit dem auf dem Display 15 befindlichen Objekt 3 noch Bildbereiche beinhaltet, die über das Objekt 3 hervorstehen. Durch den Abgleich der transformierten äußeren Hülle 16 im aufgenommenen Farbbild von Objekt 3 und Display 14 kann die dreidimensionale Vermessung weiter verfeinert bzw. angepasst werden, indem die entsprechenden über das Objekt 3 überstehenden Bereiche 16a, gezeigt in Fig.5, der transformierten äußeren Hülle 16 entfernt werden.

Die Identifikation von Displaybereichen im Farbbild erfolgt dabei über eine zeitliche Analyse jedes individuellen Pixels, z.B. durch Abspielen einer schnellen Schwarz-Weiß-Sequenz auf dem Display 14. In zum Display 14 überstehenden Bereichen 16a der transformierten äußeren Hülle 16 werden diese Farbwechsel deutlich sichtbar sein, wohingegen in zum Objekt 3 gehörenden Bereichen aufgrund der Verdeckung des Displays 14 keine Farbwechsel sichtbar sein werden.

Sowohl das elektrische Display 14 als auch die zusätzliche Farbkamera 15 werden über die Eingabeeinrichtung 10 gesteuert und konfiguriert.

In Fig. 6 ist eine vierte Ausführungsform des Untergrundes 2 gezeigt. Der Untergrund 2 weist eine opake Funktionsschicht 9 und eine transparente Platte 8 mit einer Lage aus elektrochromen Glas 17 auf. Der Transmissionsgrad des elektrochromen Glases 17 ist einstellbar und kann vollständig opak geschaltet werden, sodass das von der Sendevorrichtung 4 ausgesandte Licht L nicht mehr durch die zuvor transparente Platte 8 fallen kann und direkt an der Oberseite der nun intransparenten Platte 8 reflektiert wird. Durch das Opak-Schalten des elektrochromen Glases 17, wird die Oberseite der Platte 8 für die Ermittlungsvorrichtung 6 erfassbar und der Abstand zur Oberseite der Platte 6 kann gemessen werden.

Mit der Schaltbarkeit des elektrochromen Glassen 17 von einem transparenten in einen intransparenten Zustand kann mit gemessenen Abstandswerten der Ermittlungsvorrichtung 6 im transparenten Zustand des elektrochromen Glases 17, bei der die ausgesandten Lichtstrahlen L am Untergrund 2 reflektiert werden, in Verbindung mit gemessenen Abstandswerten des intransparent geschaltenen, elektrochromen Glases 17, bei denen die ausgesandten Lichtstrahlen L an der Oberseite des elektrochromen Glases 17 reflektiert werden, die Ermittlungsvorrichtung 6 aus der Differenz der beiden Abstandmessungen (im transparenten und intransparenten Zustand) die Dicke D der transparenten Platte 8 ermitteln. Das elektrochrome Glas 17 wird über die Eingabeeinrichtung 10 angesteuert.

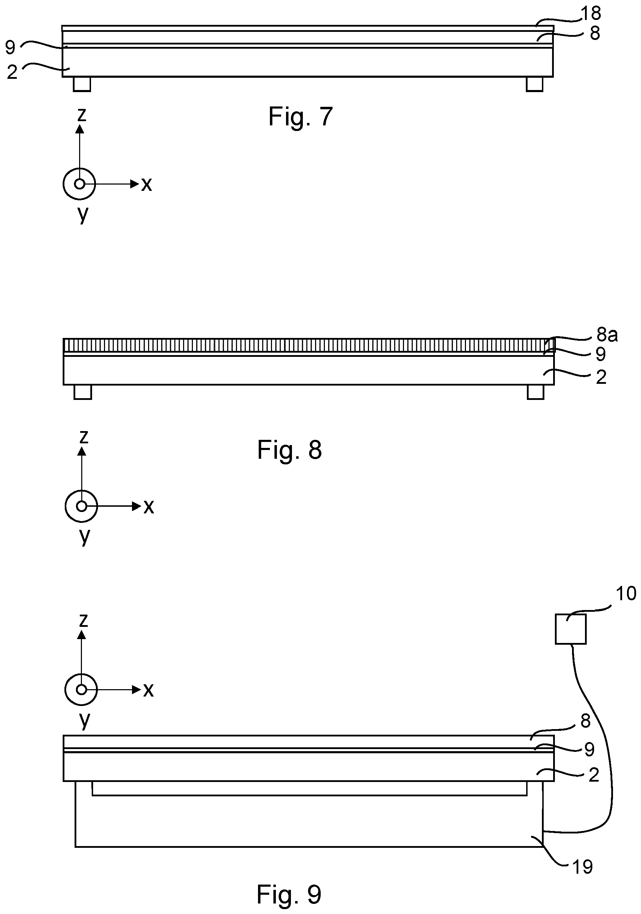

In Fig. 7 ist eine fünfte Ausführungsform des Untergrunds 2 dargestellt mit opaker Funktionsschicht 9, transparenter Platte 8 und zusätzlich einer weiteren Schutzfolie 18, die die transparente Platte 8 vor Kratzern und anderen Beschädigungen schützt, um stabile Transmissionseigenschaften der transparenten Platte 8 zu gewährleisten.

In Fig. 8 ist eine sechste Ausführungsform des Untergrundes 2 dargestellt, wobei der Untergrund 2 neben der opaken Funktionsschicht 9 eine transparente Platte 8a mit polarisierenden Eigenschaften aufweist. Die polarisierenden Eigenschaften der transparenten Platte 8a dienen dazu, Spiegelungen zu reduzieren und somit die Messgenauigkeit der Anordnung 1 zu erhöhen.

Fig. 9 zeigt eine siebte Ausführungsform des Untergrundes 2 mit opaker Funktionsschicht 9 und transparenter Platte 8, wobei der Untergrund 2 als Auflagefläche einer Waage 19 ausgeführt ist. Die Waage 19 wird hierbei mit der Eingabeeinrichtung 10 gesteuert.

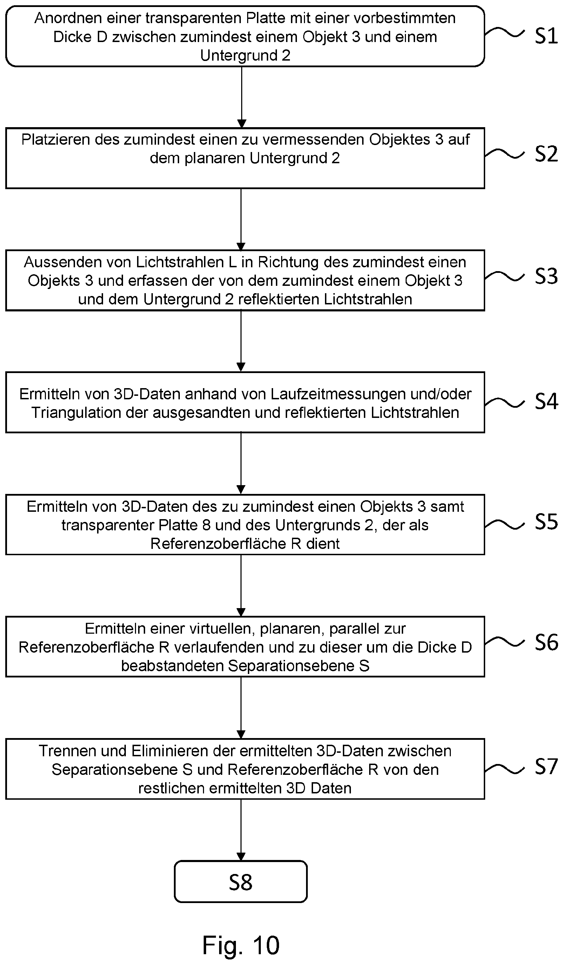

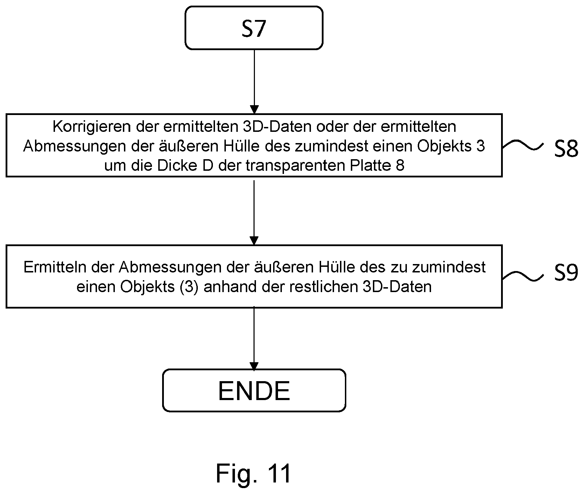

Fig. 10 und Fig. 11 zeigen ein Ablaufdiagramm, das die Summe und logische Abfolge der Verfahrensschritte des erfindungsgemäßen Verfahrens zum dreidimensionalen Vermessen von Objekten abbildet.

Zunächst wird in Schritt S1 die transparente Platte 8 mit einer vorbestimmten Dicke D zwischen zumindest einem Objekt 3 und einem Untergrund 2 angeordnet.

In Schritt S2 wird das zumindest eine zu vermessende Objekt 3 auf dem planaren Untergrund 2 platziert.

In Schritt S3 werden Lichtstrahlen L in Richtung des zumindest einen Objekts 3 und von dem zumindest einem Objekt 3 und dem Untergrund 2 reflektierten Lichtstrahlen erfasst.

In Schritt S4 werden 3D-Daten anhand von Laufzeitmessungen und/oder Triangulation der ausgesandten und reflektierten Lichtstrahlen ermittelt.

In Schritt S5 werden die 3D-Daten des zu zumindest einen Objekts 3 samt transparenter Platte 8 und des Untergrunds 2, der als Referenzoberfläche R dient ermittelt.

In Schritt S6 wird eine virtuelle, planare, parallele zur Referenzoberfläche R verlaufende und zu dieser um die Dicke D beabstandete Separationsebene S ermittelt.

In Schritt S7 werden die ermittelten 3D-Daten zwischen Separationsebene S und Referenzoberfläche R von den restlichen ermittelten 3D Daten getrennt und eliminiert.

In Schritt S8 werden die ermittelten 3D-Daten oder die ermittelten Abmessungen der äußeren Hülle des zumindest einen Objekts 3 um mindestens die Dicke D der transparenten Platte 8 korrigiert.

In Schritt S9 werden die Abmessungen der äußeren Hülle des zumindest einen Objekts 3 anhand der restlichen 3D-Daten ermittelt.

Nach Schritt S9 ist die Messung abgeschlossen.

**Patentansprüche**

1.  Anordnung (1) zum dreidimensionalen Vermessen von Objekten (3), mit:

    einem planaren Untergrund (2), um darauf zumindest ein zu vermessendes Objekt (3) zu platzieren;
    eine Sendevorrichtung (4) zum Aussenden von Lichtstrahlen (L) in Richtung des zumindest einen Objekts (3);
    eine Empfangsvorrichtung (5) zum Erfassen der von dem zumindest einem Objekt (3) und dem Untergrund (2) reflektierten Lichtstrahlen; und
    eine Ermittlungsvorrichtung (6) zum Ermitteln von 3D-Daten anhand von Laufzeitmessungen und/oder Triangulation der ausgesandten und reflektierten Lichtstrahlen und zum Ermitteln der Abmessungen der äußeren Hülle des zumindest einen Objekts (3) aus den ermittelten 3D-Daten;
    eine transparente Platte (8), insbesondere transparente Kunststoffplatte (8), mit einer vorbestimmten Dicke (D) zum Anordnen zwischen dem zumindest einem Objekt (3) und dem Untergrund (2), wobei die Dicke (D) höher als ein sich auf dem Untergrund (2) ausbildender Messungenauigkeitsbereich (G) ist, vorzugsweise die Dicke (D) in einem Bereich zwischen 1 und 50 Millimetern, besonders bevorzugt in einem Bereich zwischen 1 und 8 Millimetern liegt, wobei die Ermittlungsvorrichtung (6) die ermittelten 3D-Daten oder die ermittelten Abmessungen der äußeren Hülle des zumindest einen Objekts (3) um die Dicke (D) der transparenten Platte (8) korrigiert, indem
    die Ermittlungsvorrichtung (6) zunächst 3D-Daten des zu zumindest einen Objekts (3) samt transparenter Platte (8) und des Untergrunds (2), der als Referenzoberfläche (R) dient, ermittelt;

    **dadurch gekennzeichnet, dass**
    die Ermittlungsvorrichtung (6) eine virtuelle, planare, parallel zur Referenzoberfläche (R) verlaufende und zu dieser um mindestens die Dicke (D) beabstandete Separationsebene (S) ermittelt;
    die Ermittlungsvorrichtung (6) die ermittelten 3D-Daten zwischen Separationsebene (S) und Referenzoberfläche (R) von den restlichen ermittelten 3D Daten trennt und eliminiert; und
    die Ermittlungsvorrichtung (6) die Abmessungen der äußeren Hülle des zu zumindest einen Objekts (3) anhand der restlichen 3D-Daten ermittelt.

2.  Anordnung (1) zum dreidimensionalen Vermessen von Objekten (3) nach Anspruch 1, **ferner gekennzeichnet durch** mindestens eine verstellbare Hubsäule (11), um die transparente Platte (8) in Höhenrichtung um einen Abstand (A) in einem Bereich von 0,1 - 20 Millimetern vom Untergrund (2) zu beabstanden.

3.  Anordnung (1) zum dreidimensionalen Vermessen von Objekten (3) nach Anspruch 1 oder 2, **ferner gekennzeichnet durch** eine Eingabeeinrichtung (10) zur manuellen oder automatisierten Eingabe der Dicke (D) der transparenten Platte (8) und/ oder eine Eingabeschnittstelle (13) zum Empfangen des von einer Messvorrichtung (12) gemessenen Abstandes (A) zwischen transparenter Platte (8) und Untergrund (2).

4. Anordnung (1) zum dreidimensionalen Vermessen von Objekten (3) nach einem der vorhergehenden Ansprüche 1 bis 3, **dadurch gekennzeichnet, dass**

   die Sendevorrichtung (4), die Empfangsvorrichtung (5) und die Ermittlungsvorrichtung (6) für die Laufzeitmessung der ausgesandten und reflektierten Lichtstrahlen als eine Time-of-Flight-Kamera und/oder als eine LiDAR-Kamera ausgeführt sind; oder
   die Sendevorrichtung (4), die Empfangsvorrichtung (5) und die Ermittlungsvorrichtung (6) für die Triangulation der ausgesandten und reflektierten Lichtstrahlen als eine Structured-Light-Kamera und/oder als eine Stereo-Kamera ausgeführt sind.

5. Anordnung (1) zum dreidimensionalen Vermessen von Objekten (3) nach einem der vorhergehenden Ansprüche 1 bis 4, **dadurch gekennzeichnet, dass** der Untergrund (2) eine opake Oberfläche und/oder die transparente Platte (8) auf der dem Untergrund (2) zugewandten Seite eine opake, Licht reflektierende, vorzugsweise diffus-reflektierende Funktionsschicht (9), insbesondere eine Kunststoff-Hartschaumschicht, aufweist, welche durch die transparente Platte (8) fallendes Licht (L) reflektiert.

6. Anordnung (1) zum dreidimensionalen Vermessen von Objekten (3) nach einem der vorhergehenden Ansprüche 1 bis 5, **dadurch gekennzeichnet, dass** die transparente Platte (8) zumindest eine Lage aus elektrochromen Glas (17), vorzugsweise mit einstellbarem Transmissionsgrad, aufweist.

7. Anordnung (1) zum dreidimensionalen Vermessen von Objekten (3) nach einem der vorhergehenden Ansprüche 1 bis 6, **dadurch gekennzeichnet, dass** die transparente Platte (8) zumindest eine austauschbare, transparente Lage (18), vorzugsweise Schutzfolie, aus Kunststoff aufweist, die die transparente Platte (8) vor Oberflächenschäden, insbesondere Kratzern schützt, sodass die optischen Eigenschaften der transparenten Platte (8) unverändert bleiben.

8. Anordnung (1) zum dreidimensionalen Vermessen von Objekten (3) nach einem der vorhergehenden Ansprüche 1 bis 7, **dadurch gekennzeichnet, dass** die transparente Platte (8) polarisierende Eigenschaften hat.

9. Anordnung zum dreidimensionalen Vermessen von Objekten (3) nach einem der vorgehenden Ansprüche 1 bis 8, **dadurch gekennzeichnet, dass** der Untergrund (2) durch eine Auflagefläche einer Waage (19) gebildet wird.

10. Anordnung (1) zum dreidimensionalen Vermessen von Objekten (3) nach einem der Ansprüche 1 bis 4, **dadurch gekennzeichnet, dass** die transparente Platte (8) als Teil eines elektrisch angesteuerten Displays (14), insbesondere eines LCD- oder OLED-Displays (14), ausgeführt ist.

11. Verfahren zum dreidimensionalen Vermessen von Objekten, mit den Schritten:

   Platzieren zumindest eines zu vermessenden Objekts (3) auf einem planaren Untergrund (2);
   Aussenden von Lichtstrahlen (L) in Richtung des zumindest einen Objekts (3) und Erfassen der von dem zumindest einem Objekt (3) und dem Untergrund (2) reflektierten Lichtstrahlen;
   Ermitteln von 3D-Daten anhand von Laufzeitmessungen und/oder Triangulation der ausgesandten und reflektierten Lichtstrahlen; und Ermitteln der Abmessungen der äußeren Hülle des zumindest einen Objekts (3) aus den ermittelten 3D-Daten,
   Anordnen einer transparenten Platte (8) mit einer vorbestimmten Dicke (D) zwischen dem zumindest einem Objekt (3) und dem Untergrund (2), wobei die Dicke (D) größer als ein sich auf dem Untergrund (2) ausbildender Messungenauigkeitsbereich (G) ist, vorzugsweise die Dicke (D) in einem Bereich zwischen 1 und 50 Millimetern, besonders bevorzugt in einem Bereich zwischen 1 und 8 Millimetern liegt;
   Korrigieren der ermittelten 3D-Daten oder der ermittelten Abmessungen der äußeren Hülle des zumindest einen Objekts (3) um die Dicke (D) der transparenten Platte (8),
   Ermitteln von 3D-Daten des zu zumindest einen Objekts (3) samt transparenter Platte (8) und des Untergrunds (2), der als Referenzoberfläche (R) dient;
   **gekennzeichnet durch die Schritte:**

   Ermitteln einer virtuellen, planaren, parallel zur Referenzoberfläche (R) verlaufenden und zu dieser um die Dicke (D) beabstandeten Separationsebene (S);
   Trennen und Eliminieren der ermittelten 3D-Daten zwischen Separationsebene (S) und Referenzoberfläche (R) von den restlichen ermittelten 3D Daten; und
   Ermitteln der Abmessungen der äußeren Hülle des zumindest einen Objekts (3) anhand der restlichen 3D-Daten.

## Claims

1. An arrangement (1) for three-dimensional measurement of objects (3) comprising:

   a planar substrate (2) for placing thereon at least one object (3) to be measured;
   an emitting device (4) for emitting light beams (L) in the direction of the at least one object (3);
   a receiving device (5) for detecting the light beams reflected from the at least one object (3) and the substrate (2); and
   a determining device (6) for determining 3D data on the basis of time-of-flight measurements and/or triangulation of the emitted and reflected light beams and for determining the dimensions of the outer shell of the at least one object (3) from the determined 3D data;
   a transparent plate (8), in particular transparent plastic plate (8), having a predetermined thickness (D) for placement between the at least one object (3) and the substrate (2), the thickness (D) being higher than a measurement inaccuracy range (G) forming on the substrate (2), preferably the thickness (D) being in a range between 1 and 50 millimeters, more preferably in a range between 1 and 8 millimeters,
   wherein the determining device (6) corrects the determined 3D data or the determined dimensions of the outer shell of the at least one object (3) by the thickness (D) of the transparent plate (8) in that the determining device (6) first determines 3D data of the at least one object (3) to be measured together with the transparent plate (8) and the substrate (2), which serves as reference surface (R);
   **characterized in that**
   the determining device (6) determines a virtual, planar separation plane (S) running parallel to the reference surface (R) and spaced apart from the latter by at least the thickness (D);
   the determining device (6) separates and eliminates the determined 3D data between the separation plane (S) and the reference surface (R) from the remaining determined 3D data; and
   the determining device (6) determines the dimensions of the outer shell of the at least one object (3) on the basis of the remaining 3D data.

2. The arrangement (1) for three-dimensional measuring of objects (3) according to claim 1, further **characterized by** at least one adjustable lifting column (11) for spacing the transparent plate (8) in height direction by a distance (A) in a range of 0.1 - 20 millimeters from the substrate (2).

3. The arrangement (1) for three-dimensional measurement of objects (3) according to claim 1 or 2, further **characterized by** an input device (10) for manual or automated input of the thickness (D) of the transparent plate (8) and/or an input interface (13) for receiving the distance (A) between the transparent plate (8) and the substrate (2) measured by a measuring device (12).

4. The arrangement (1) for three-dimensional measurement of objects (3) according to any of the preceding claims 1 to 3, **characterized in that**

   the emitting device (4), the receiving device (5) and the determining device (6) for the time-of-flight measurement of the emitted and reflected light beams are designed as a time-of-flight camera and/or as a LiDAR camera; or
   the emitting device (4), the receiving device (5) and the determining device (6) for the triangulation of the emitted and reflected light beams are designed as a structured light camera and/or as a stereo camera.

5. The arrangement (1) for the three-dimensional measurement of objects (3) according to one of the preceding claims 1 to 4, **characterized in that** the substrate (2) has an opaque surface and/or the transparent plate (8) has, on the side facing the substrate (2), an opaque, light-reflecting, preferably diffuse-reflecting functional layer (9), in particular a plastic hard foam layer, which reflects light (L) falling through the transparent plate (8).

6. The arrangement (1) for three-dimensional measurement of objects (3) according to one of the preceding claims 1 to 5, **characterized in that** the transparent plate (8) has at least one layer of electrochromic glass (17), preferably with adjustable transmittance.

7. The arrangement (1) for the three-dimensional measurement of objects (3) according to one of the preceding claims 1 to 6, **characterized in that** the transparent plate (8) has at least one replaceable transparent layer (18), preferably protective film, made of plastic, which protects the transparent plate (8) from surface damage, in particular scratches, so that the optical properties of the transparent plate (8) remain unchanged.

8. The arrangement (1) for three-dimensional measurement of objects (3) according to one of the preceding claims 1 to 7, **characterized in that** the transparent plate (8) has polarizing properties.

9. The arrangement for three-dimensional measuring of objects (3) according to one of the preceding claims 1 to 8, **characterized in that** the substrate (2) is formed by a supporting surface of a balance (19).

10. The arrangement (1) for three-dimensional measuring of objects (3) according to one of the claims 1 to 4, **characterized in that** the transparent plate (8) is designed as part of an electrically controlled display (14), in particular an LCD or OLED display (14).

11. A method for three-dimensional measurement of objects, comprising the steps:

placing at least one object (3) to be measured on a planar substrate (2);
emitting light beams (L) in the direction of the at least one object (3) and detecting the light beams reflected by the at least one object (3) and the substrate (2);
determining 3D data based on time-of-flight measurements and/or triangulation of the emitted and reflected light beams; and
determining the dimensions of the outer shell of the at least one object (3) from the determined 3D data,
arranging a transparent plate (8) with a predetermined thickness (D) between the at least one object (3) and the substrate (2), the thickness (D) being greater than a measurement inaccuracy range (G) forming on the substrate (2), preferably the thickness (D) being in a range between 1 and 50 millimeters, more preferably in a range between 1 and 8 millimeters;
correcting the determined 3D data or the determined dimensions of the outer shell of the at least one object (3) by the thickness (D) of the transparent plate (8),
determining 3D data of the at least one object (3) to be measured together with the transparent plate (8) and the substrate (2) serving as reference surface (R);
**characterized by the steps:**

determining a virtual, planar separation plane (S) running parallel to the reference surface (R) and spaced from it by the thickness (D);
separating and eliminating the determined 3D data between the separation plane (S) and the reference surface (R) from the remaining determined 3D data; and
determining the dimensions of the outer shell of the at least one object (3) from the remaining 3D data.

**Revendications**

1. Agencement (1) destiné à la mesure tridimensionnelle d'objets (3), comprenant :

une base plane (2), pour placer sur celle-ci au moins un objet (3) à mesurer ;
un dispositif d'émission (4) destiné à émettre des rayons lumineux (L) en direction de l'au moins un objet (3) ;
un dispositif de réception (5) destiné à détecter les rayons lumineux réfléchis par le au moins un objet (3) et la base (2) ; et
un dispositif de détermination (6) destiné à déterminer des données 3D à l'aide de mesures de temps et/ou d'une triangulation des rayons lumineux émis et réfléchis et destiné à déterminer les dimensions de l'enveloppe externe de l'au moins un objet (3) à partir des données 3D déterminées ;
une plaque transparente (8), en particulier une plaque en matière plastique transparente (8), comprenant une épaisseur prédéterminée (D) destinée à être agencée entre le au moins un objet (3) et la base (2), dans laquelle l'épaisseur (D) est supérieure à une zone d'incertitude de mesure (G) se formant sur la base (2), de préférence l'épaisseur (D) se situe dans une plage comprise entre 1 et 50 millimètres, le plus préférentiellement dans une plage comprise entre 1 et 8 millimètres,
dans lequel le dispositif de détermination (6) corrige les données 3D déterminées ou les dimensions déterminées de l'enveloppe externe de l'au moins un objet (3) selon l'épaisseur (D) de la plaque transparente (8), en ce que
le dispositif de détermination (6) détermine d'abord des données 3D de l'au moins un objet (3), plaque transparente (8) comprise, et de la base (2), qui sert de surface de référence (R) ;
**caractérisé en ce que**
le dispositif de détermination (6) détermine un niveau de séparation (S) virtuel plan qui s'étend parallèlement à la surface de référence (R) et espacé de celle-ci d'au moins l'épaisseur (D) ;
le dispositif de détermination (6) sépare et élimine les données 3D déterminées entre le niveau de séparation (S) et la surface de référence (R) du reste des données 3D déterminées ; et
le dispositif de détermination (6) détermine les dimensions de l'enveloppe externe de l'au moins un objet (3) à l'aide du reste des données 3D.

2. Agencement (1) destiné à la mesure tridimensionnelle d'objets (3) selon la revendication 1, **caractérisé en outre par** au moins une colonne de levage (11) réglable, pour espacer la plaque transparente (8) de la base (2) dans la direction verticale d'une distance (A) située dans une plage allant de 0,1 à 20 millimètres.

3. Agencement (1) destiné à la mesure tridimensionnelle d'objets (3) selon la revendication 1 ou 2, **caractérisé en outre par** un appareil de saisie (10) pour la saisie manuelle ou automatique de l'épaisseur (D) de la plaque transparente (8) et/ou une interface d'entrée (13) pour recevoir la distance (A) mesurée par un dispositif de mesure (12) entre la plaque transparente (8) et la base (2).

4. Agencement (1) destiné à la mesure tridimensionnelle d'objets (3) selon l'une quelconque des revendications 1 à 3, **caractérisé en ce que**

   le dispositif d'émission (4), le dispositif de réception (5) et le dispositif de détermination (6) sont réalisés pour la mesure de temps des rayons lumineux émis et réfléchis comme une caméra à temps de vol et/ou comme une caméra LiDAR ; ou
   le dispositif d'émission (4), le dispositif de réception (5) et le dispositif de détermination (6) sont réalisés pour la triangulation des rayons lumineux émis et réfléchis comme une caméra à lumière structurée et/ou comme une caméra stéréo .

5. Agencement (1) destiné à la mesure tridimensionnelle d'objets (3) selon l'une quelconque des revendications précédentes 1 à 4, **caractérisé en ce que** la base (2) présente une surface opaque et/ou la plaque transparente (8) sur laquelle le côté tourné vers la base (2) présente une couche fonctionnelle (9) opaque, réfléchissant la lumière, de préférence réfléchissante de manière diffuse, en particulier une couche de mousse dure en matière plastique, qui réfléchit la lumière (L) incidente à travers la plaque transparente (8).

6. Agencement (1) destiné à la mesure tridimensionnelle d'objets (3) selon l'une quelconque des revendications 1 à 5, **caractérisé en ce que** la plaque transparente (8) présente au moins une couche en verre électrochrome (17), de préférence un degré de transmission réglable.

7. Agencement (1) destiné à la mesure tridimensionnelle d'objets (3) selon l'une quelconque des revendications 1 à 6, **caractérisé en ce que** la plaque transparente (8) présente au moins une couche interchangeable et transparente (18), de préférence un film protecteur, en matière plastique, qui protège la plaque transparente (8) contre des dommages de surface, en particulier des rayures, de sorte que les propriétés optiques de la plaque transparente (8) restent inchangées.

8. Agencement (1) destiné à la mesure tridimensionnelle d'objets (3) selon l'une quelconque des revendications précédentes 1 à 7, **caractérisé en ce que** la plaque transparente (8) présente des propriétés polarisantes.

9. Agencement destiné à la mesure tridimensionnelle d'objets (3) selon l'une quelconque des revendications précédentes 1 à 8, **caractérisé en ce que** la base (2) est formée par une surface d'appui d'une balance (19).

10. Agencement destiné à la mesure tridimensionnelle d'objets (3) selon l'une quelconque des revendications 1 à 4, **caractérisé en ce que** la plaque transparente (8) est réalisée en tant que partie d'un écran à commande électrique (14), en particulier d'un écran LCD ou OLED.

11. Procédé destiné à la mesure tridimensionnelle d'objets, comprenant les étapes consistant à :

    placer au moins un objet (3) à mesurer sur une base plane (2) ;
    émettre des rayons lumineux (L) en direction de l'au moins un objet (3) et détecter les rayons lumineux réfléchis par le au moins un objet (3) et la base (2) ;
    déterminer des données 3D à l'aide de mesures de temps et/ou une triangulation des rayons lumineux émis et réfléchis ; et
    déterminer les dimensions de l'enveloppe externe de l'au moins un objet (3) à partir des données 3D déterminées,
    agencer une plaque transparente (8) d'une épaisseur prédéterminée (D) entre le au moins un objet (3) et la base (2), dans laquelle l'épaisseur (D) est supérieure à une zone d'incertitude de mesure (G) formée sur la base (2), de préférence l'épaisseur (D) se situe dans une plage comprise entre 1 et 50 millimètres, le plus préférentiellement dans une plage comprise entre 1 et 8 millimètres ;
    corriger les données 3D déterminées ou les dimensions déterminées de l'enveloppe externe de l'au moins un objet (3) selon l'épaisseur (D) de la plaque transparente (8),
    déterminer des données 3D de l'au moins un objet (3), plaque transparente (8) comprise, et de la base (2), qui sert de surface de référence (R) ;
    **caractérisé par les étapes consistant** à :

    déterminer un niveau de séparation (S) virtuel plan qui s'étend parallèlement à la surface de référence (R) et espacé de celle-ci d'au moins l'épaisseur (D) ;
    séparer et éliminer les données 3D déterminées entre le niveau de séparation (S) et la surface de référence (R) du reste des données 3D déterminées ; et

**EP 4 170 279 B1**

déterminer les dimensions de l'enveloppe externe de l'au moins un objet (3) à l'aide du reste des données 3D.

Fig. 1

Fig. 2

Fig. 3

Fig. 4

Fig. 5

Fig. 6

Fig. 7

Fig. 8

Fig. 9

Anordnen einer transparenten Platte mit einer vorbestimmten Dicke D zwischen zumindest einem Objekt 3 und einem Untergrund 2 — S1

Platzieren des zumindest einen zu vermessenden Objektes 3 auf dem planaren Untergrund 2 — S2

Aussenden von Lichtstrahlen L in Richtung des zumindest einen Objekts 3 und erfassen der von dem zumindest einem Objekt 3 und dem Untergrund 2 reflektierten Lichtstrahlen — S3

Ermitteln von 3D-Daten anhand von Laufzeitmessungen und/oder Triangulation der ausgesandten und reflektierten Lichtstrahlen — S4

Ermitteln von 3D-Daten des zu zumindest einen Objekts 3 samt transparenter Platte 8 und des Untergrunds 2, der als Referenzoberfläche R dient — S5

Ermitteln einer virtuellen, planaren, parallel zur Referenzoberfläche R verlaufenden und zu dieser um die Dicke D beabstandeten Separationsebene S — S6

Trennen und Eliminieren der ermittelten 3D-Daten zwischen Separationsebene S und Referenzoberfläche R von den restlichen ermittelten 3D Daten — S7

S8

Fig. 10

S7

Korrigieren der ermittelten 3D-Daten oder der ermittelten Abmessungen der äußeren Hülle des zumindest einen Objekts 3 um die Dicke D der transparenten Platte 8    S8

Ermitteln der Abmessungen der äußeren Hülle des zu zumindest einen Objekts (3) anhand der restlichen 3D-Daten    S9

ENDE

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 3230773 U
- CN 211121547 U
- JP 3230773 B
- CN 110580732 A
- US 2018347962 A1
- US 2006112023 A1
- CN 111273439 A